# EUROPÄISCHE PATENTSCHRIFT

(11) **EP 4 116 059 B1**
(45) Veröffentlichungstag und Bekanntmachung des Hinweises auf die Patenterteilung: **08.11.2023**
(21) Anmeldenummer: 22166266.1
(22) Anmeldetag: 01.04.2022
(51) Int. Cl.: B29C 45/27, B29C 45/76

(54) **ANORDNUNG ZUM EINSPRITZEN VON KUNSTSTOFF IN EINE KAVITÄT EINER KUNSTSTOFFSPRITZMASCHINE**
ASSEMBLY FOR INJECTING PLASTIC INTO A CAVITY OF A PLASTIC INJECTION MOULDING MACHINE
AGENCEMENT D'INJECTION DE LA MATIÈRE PLASTIQUE DANS UNE CAVITÉ D'UNE MACHINE À INJECTER LA MATIÈRE PLASTIQUE

(30) Priorität: 07.07.2021 DE 102021117549
(43) Veröffentlichungstag der Anmeldung: 11.01.2023
(73) Patentinhaber: Meusburger Georg GmbH & Co. KG, 6960 Wolfurt (AT)
(72) Erfinder: KRAXNER, Stefan, 6850 Dornbirn (AT)
(74) Vertreter: Kesselhut, Wolf

(56) Entgegenhaltungen:
- DE-U1-202013 003 295
- US-A- 6 022 210
- US-A1- 2009 311 359
- Ewikon: "pro Control Hot runner controllers Operating manual", , 30. Januar 2020 (2020-01-30), Seiten 1-61, XP055957972, ewikon.com Gefunden im Internet: URL:https://www.ewikon.com/fileadmin/pdf/B etriebsanleitungen/Steuertechnik_fuer_Nade lverschlusssysteme/EWIKON_BA_EDC-PRO_2019_ EN.pdf [gefunden am 2022-09-06]

## Beschreibung

Die Erfindung betrifft eine Anordnung zum Einspritzen von Kunststoff in eine Kavität einer Kunststoffspritzmaschine gemäß dem Oberbegriff von Anspruch 1. Die Druckschriften US 2009/311359 A1 und DE 20 2013 003295 U1 offenbaren zumindest mehrere Merkmale gemäß diesem Oberbegriff.

Auf dem Gebiet der Kunststoffverarbeitung werden zur Herstellung von Kunststoffformteilen Anordnungen eingesetzt, bei denen flüssiges Kunststoffschmelzgut aus einem Extruder unter hohem Druck von z.B. 1500 bar in einen elektrisch auf z.B. 220°C bis 350°C erhitzten Schmelzgut-Verteiler eingebracht wird, über dessen Kanäle das flüssige Kunststoffmaterial dann zu einer Vielzahl von Düsen gelangt. Über die Düsen, die sich vom Schmelzgut-Verteiler aus durch die gekühlte Formplatte hindurch bis an die Spritzgussform heran erstrecken, wird das Schmelzgut durch eine Öffnung in der Spritzgussform hindurch in diese injiziert. Nach dem Erstarren des Schmelzguts in der gekühlten Spritzgussform wird diese geöffnet und im Anschluss daran das fertige Kunststoffformteil entnommen.

Wenn Schmelze führende Bauteile der Düsen zueinander, oder Verbindungen zwischen den Düsen und dem Schmelzgut-Verteiler oder auch Kontakt- bzw. Dichtflächen der Düsen zum Formeinsatz nicht passgenau gefertigt sind, kann es an diesen Stellen zu einem ungewollten Austritt von Schmelzgut kommen. Diese Leckagen, die auch als ein Überspritzen bezeichnet werden, treten häufig im Bereich der Angusspunkte auf, an denen das Schmelzgut in die Spritzgussform injiziert wird und die Düsen zur Erzeugung einer metallischen Dichtung formschlüssig in die komplementär ausgestalteten Aufnahmen der Formplatte eingreifen.

Zur Überwachung der Temperatur der Schmelze in den Düsen, ist es in diesem Zusammenhang bekannt, jeweils an den Heizelementen, mit denen die Düsenkörper beheizt werden oder an den Düsenkörpern direkt, Temperatursensoren anzuordnen. Diese befinden sich im direkten oder indirekten thermischen Kontakt mit den Düsenkörpern und erfassen die Temperatur der Düsenkörper, um die Temperatur der Heizelemente während des Betriebs der Kunststoffspritzmaschine entsprechend der gewünschten Solltemperatur der Kunststoffschmelze zu regeln. Mit den zuvor beschriebenen Temperatursensoren ist es nicht möglich, im Bereich des jeweiligen Angusspunktes einen Austritt von Kunststoffmaterial in den Einbauraum der Düse zwischen Düse und Formplatte während eines Injektionsvorgangs zuverlässig zu erfassen.

Demgemäß ist es eine Aufgabe der vorliegenden Erfindung, eine Anordnung zum Einspritzen von Kunststoff in eine Kavität einer Kunststoffspritzmaschine zu schaffen, die eine zuverlässige Erkennung von Leckagen im Bereich der Angusspunkte ermöglicht.

Diese Aufgabe wird erfindungsgemäß durch eine Anordnung mit den Merkmalen von Anspruch 1 gelöst.

Weitere Merkmale der Erfindung sind in den Unteransprüchen beschrieben.

Gemäß der Erfindung umfasst eine Anordnung zum Einspritzen von Kunststoff in eine Kavität einer Spritzgussform eine Aufspannplatte, gegebenenfalls eine mit der Aufspannplatte verbundene Zwischenplatte, eine mit der Zwischenplatte oder der Aufspannplatte verbundene, die Kavität begrenzende Formplatte, einen Schmelzgut-Verteiler sowie wenigstens eine Düse. Die Düse besitzt einen langgestreckten Düsenkörper, welcher sich vom Schmelzgut-Verteiler aus durch einen in der Zwischenplatte sowie der Formplatte bereit gestellten Hohlraum zu einem Angusspunkt der Spritzgussform erstreckt, in welchem das vom Schmelzgut-Verteiler durch die Düse hindurch zugeführte flüssige Schmelzgut durch die Düsenöffnung in die Kavität der Spritzgussform injiziert wird. An der Außenseite des Düsenkörpers sind eine oder mehrere elektrische Heizelemente angeordnet, mit deren Hilfe der Düsenkörper zur Verflüssigung des Kunststoffmaterials auf eine vorbestimmte Temperatur erhitzt werden kann, die z.B. bei 220 °C oder höher liegt.

Im Hohlraum der Formplatte ist zwischen der Düsenöffnung und dem Heizelement, welches am dichtesten entfernt von der Düsenöffnung angeordnet ist, und nachfolgend als düsenöffnungsseitiges Heizelement bezeichnet wird, ein zusätzlicher Temperatursensor angeordnet. Gemäß der Erfindung ist die temperaturempfindliche Sensorfläche des Temperatursensors in einem Abstand vom elektrischen Heizelement positioniert, der z.B. 1 mm bis 10 mm, bevorzugt 5 mm beträgt. Dadurch ist der Sensor, bzw. die aktive Sensorfläche, die das Temperatur-Messsignal erzeugt, erfindungsgemäß durch einen Luftraum oder allgemein einen Freiraum allseitig thermisch vom düsenöffnungsseitigen Heizelement isoliert. Alternativ kann zusätzlich ein thermisches Isolationselement, z.B. eine Lage aus einem Keramikwerkstoff oder einem faserverstärkten Hochtemperaturkunststoff oder einem sonstigen geeigneten thermischen Isolationswerkstoff, zwischen dem Heizelement und der frei liegenden temperaturempfindlichen Sensorfläche angeordnet sein, um die auf dieses vom Heizelement pro Zeiteinheit übertragene Menge an Wärmestrahlung zu verringern.

Der Temperatursensor, der z.B. ein Thermoelement, ein NTC-Widerstand oder ein PTC-Widerstand sein kann, ist mit einer elektronischen Mess- und Auswerteinrichtung gekoppelt, die erfindungsgemäß dazu eingerichtet ist, bei aktiviertem Heizelement, bzw. Heizelementen, einen Anstieg der vom Temperatursensor ermittelten Temperaturmesswerte Tₘₑₛₛ über einen vorgegebenen Temperatur-Schwellenwert T_{Schwelle} hinaus zu erfassen. Die elektronische Mess- und Auswerteinrichtung ist weiterhin mit einer Alarmeinrichtung verbunden, die ein Alarmsignal erzeugt, wenn die vom Temperatursensor gemessenen Temperaturmesswerte Tₘₑₛₛ den Temperatur-Schwellenwert T_{Schwelle} überschreiten, so dass ein Bediener der Anordnung frühzeitig darüber informiert wird, wenn an der betreffenden Düse eine Leckage auftritt, die zu einem Eintritt des flüssigen Kunststoffmaterials in den Hohlraum im Bereich des Angusspunkts führt, welcher an dieser Stelle im Wesentlichen ringförmig ausgeführt ist.

Wie die Anmelderin gefunden hat, besitzt die Erfindung den Vorteil, dass ein Eintritt von flüssiger Kunststoffschmelze aus der Kavität durch die (undichte) metallische Dichtung des Düsenkörpers im Angusspunkt hindurch in den Hohlraum zu einem instantanen Anstieg der vom Temperatursensor erfassten Temperatur-Messwerte führt, da die Oberflächentemperatur der temperaturempfindlichen Sensorfläche durch die Isolationswirkung der Luft und die in der Regel gekühlte Formplatte signifikant kühler als die Temperatur der Kunststoffschmelze ist. Wie die Anmelderin gefunden hat, liegt die mittlere vom Temperatursensor erfasste Temperatur beispielsweise bei lediglich 200 °C, wohingegen die Kunststoffschmelze eine Temperatur von 220 °C oder mehr besitzen kann.

Wie die Anmelderin weiterhin erkannt hat, ist hierbei auch die Höhe der vom Temperatursensor ermittelten Temperatur im Luftraum zwischen Heizelement und dem Angusspunkt auch zwischen aufeinanderfolgenden Injektionsvorgängen (Schüssen) vergleichsweise konstant und ändert sich nur um wenige Grad, wohingegen das Auftreten einer Leckage zu einem sofortigen sehr starken Temperaturanstieg sowie sich daran anschließenden starken Temperaturänderungen der temperaturempfindlichen Sensorfläche bei den anschließenden Injektionsvorgängen führt, die z.B. im Bereich von ca. + - 20 °C liegen. Nach dem vollständigen Umspritzen des Temperatursensors mit Kunststoffmaterial erfolgt dann in überraschender Weise ein signifikantes Fallen der vom Sensor erfassten Temperaturwerte, wenn das anfänglich flüssige Kunststoffmaterial durch die gekühlte Formplatte soweit abgekühlt wurde, dass dieses die temperaturempfindliche Sensorfläche vollständig als isolierende Schicht aus verfestigtem Kunststoffmaterial umschließt.

Nach einem weiteren der Erfindung zugrunde liegenden Gedanken ist die temperaturempfindliche Sensorfläche zusätzlich in einem zweiten Abstand von der Außenoberfläche des Düsenkörpers angeordnet, so dass auch zwischen der temperaturempfindlichen Sensorfläche und der Außenoberfläche des Düsenkörpers ein weiterer Luftraum bereit gestellt wird, welcher die temperaturempfindliche Sensorfläche gegenüber der Außenoberfläche des Düsenkörpers thermisch isoliert. Hierdurch ergibt sich der Vorteil, dass auch gegenüber dem Düsenkörper eine thermische Abschirmung gegen eine Übertragung von thermischer Energie durch einen direkten Materialkontakt des bevorzugt aus Metall bestehenden Düsenkörpers und der z.B. aus Halbleiterwerkstoff oder auch Metall bestehenden temperaturempfindlichen Sensorfläche stattfindet. Hierdurch wird der vom Temperatursensor erfasste Temperaturanstieg beim Auftreten einer Leckage, und damit die Erkennungsgenauigkeit, in vorteilhafter Weise zusätzlich erhöht. Die thermische Abschirmung der temperaturempfindlichen Sensorfläche gegenüber der Außenoberfläche des Düsenkörpers kann jedoch zusätzlich alternativ auch durch einen bekannten Isolationswerkstoff erfolgen, z.B. einen faserverstärkten Hochtemperaturisolationswerkstoff, wie er zum thermischen Isolieren von Pressen verwendet wird.

Ein bevorzugter Abstand, in welchem die temperaturempfindliche Sensorfläche vom Heizelement angeordnet ist, liegt im Bereich zwischen 1 mm und 10 mm, bevorzugt zwischen 2 und 6 mm, wodurch sich ein guter Kompromiss zwischen einer strahlungsbedingten Erwärmung der temperaturempfindlichen Sensorfläche durch das Heizelement und einer Abkühlung desselben nach dem regelungsbedingten Ausschalten des Heizelements ergibt. Dies führt infolge der Abkühlung durch die gekühlte Spritzgussform/Formplatte beim erneuten Einschalten des Heizelements in vorteilhafter Weise nicht zu einem übermäßig starken Temperaturanstieg der temperaturempfindlichen Sensorfläche.

In gleicher Weise beträgt der Abstand, in welchem die temperaturempfindliche Sensorfläche von der Außenoberfläche des Düsenkörpers angeordnet ist, in vorteilhafter Weise zwischen 1 mm und 10 mm, bevorzugt zwischen 2 und 6 mm.

Nach einem weiteren der Erfindung zugrunde liegenden Gedanken ist der Temperatursensor in einer Sensorhalterung aus einem thermisch isolierenden Werkstoff aufgenommen, die direkt an der Außenseite des Düsenkörpers befestigt ist. Der Temperatursensor ist hierbei bevorzugt in einem radial zurück genommenen Abschnitt des Düsenkörpers positioniert, so dass dieser zur Vermeidung von Beschädigungen beim Einsetzen der Düse in den Hohlraum nicht über den Umfang der Heizelemente hinaus ragt, welche die Düsenkörper ringartig umschließen.

Bei der bevorzugten Ausführungsform der Erfindung umfasst die Alarmeinrichtung eine Signallampe und/oder einen akustischen Signalgeber und/oder auch einen Bildschirm, auf welchem das Warnsignal, welches automatisiert erzeugt wird, wenn die Temperaturmesswerte den Temperatur-Schwellenwert überschreiten, für den Bediener sichtbar und/oder hörbar ausgegeben wird.

Nach einem weiteren der Erfindung zugrunde liegenden Gedanken ist die elektronische Mess- und Auswerteinrichtung dazu eingerichtet, den Verlauf der vom Temperatursensor erfassten Temperaturmesswerte während des Betriebs der Anordnung über eine Vielzahl von Arbeitszyklen hinweg zu erfassen und die Ausgabe des Alarmsignals über die Alarmeinrichtung zu veranlassen, wenn der vom Temperatursensor während des Betriebs der Anordnung ermittelte Temperaturmesswert im Hohlraum den vorgegebenen Temperatur-Schwellenwert in mehr als zwei aufeinander folgenden Arbeitszyklen überschreitet. Hierdurch wird sichergestellt, dass auch im Falle einer längeren Unterbrechung des Betriebs der erfindungsgemäßen Anordnung die Leckage-Überwachungsfunktion auch nach dem Wiederhochfahren der Anordnung sicher gestellt ist.

Bei einer weiteren Ausführungsform der Erfindung besitzt die elektronische Mess- und Auswerteinrichtung, die bevorzugt als Mikrocontrollerschaltung verwirklicht ist, einen elektronischen Speicher, in welchen der Temperatur-Schwellenwert bevorzugt manuell als Temperatur-Differenzwert eingegeben und gespeichert werden kann, bei dem die Alarmeinrichtung aktiviert wird. Hierdurch eröffnet sich die Möglichkeit, den Temperatur-Schwellenwert in Abhängigkeit vom jeweiligen Spritzgussauftrag individuell nach oben zu setzen oder abzusenken.

Weiterhin kann es vorgesehen sein, dass die elektronische Mess- und Auswerteinrichtung durch eine entsprechende Programmierung der Mikrocontrollerschaltung dazu eingerichtet ist, nach dem Durchlaufen einer Aufheizphase einen mittleren Temperaturstartwert selbständig zu erfassen und im Speicher abzulegen, insbesondere durch die Bildung eines mittleren Temperaturstartwerts aus den gemessenen Temperaturwerten während der Aufheizphase oder Anlaufphase. Dieser wird im Anschluss daran vor dem Durchlaufen eines ersten Arbeitszyklus der Anordnung aus dem Speicher ausgelesen und von der elektronischen Mess- und Auswerteinrichtung dazu herangezogen, den Temperatur-Schwellenwert durch Addition des mittleren Temperaturstartwerts mit dem vorgegebenen Temperatur-Differenzwert zu bestimmen, welcher zuvor bevorzugt von Hand im Speicher abgelegt wurde. Hierdurch ergibt sich der Vorteil, dass die Erkennung einer Leckage weitestgehend unabhängig von der jeweiligen Umgebungstemperatur in der Halle, in der die erfindungsgemäße Anordnung betrieben wird, bzw. von der Jahreszeit (Sommer/Winter) teilautomatisiert erfolgen kann.

Die Erfindung wird nachfolgend mit Bezug auf die Zeichnungen anhand mehrerer bevorzugter Ausführungsformen beschrieben.

In den Zeichnungen zeigen:
- Fig. 1: eine ausschnittsweise schematische Querschnittsansicht einer erfindungsgemäßen Anordnung in Höhe einer Düse,
- Fig. 1.1: eine ausschnittsweise vergrößerte Darstellung der Düse von Fig. 1 im Bereich des Düsenmundstücks/Angusspunkts, und
- Fig. 2: eine schematische Darstellung eines vom Temperatursensor erfassten typischen Temperaturverlaufs während mehrerer aufeinanderfolgender Arbeitszyklen der Anordnung mit und ohne Leckage.

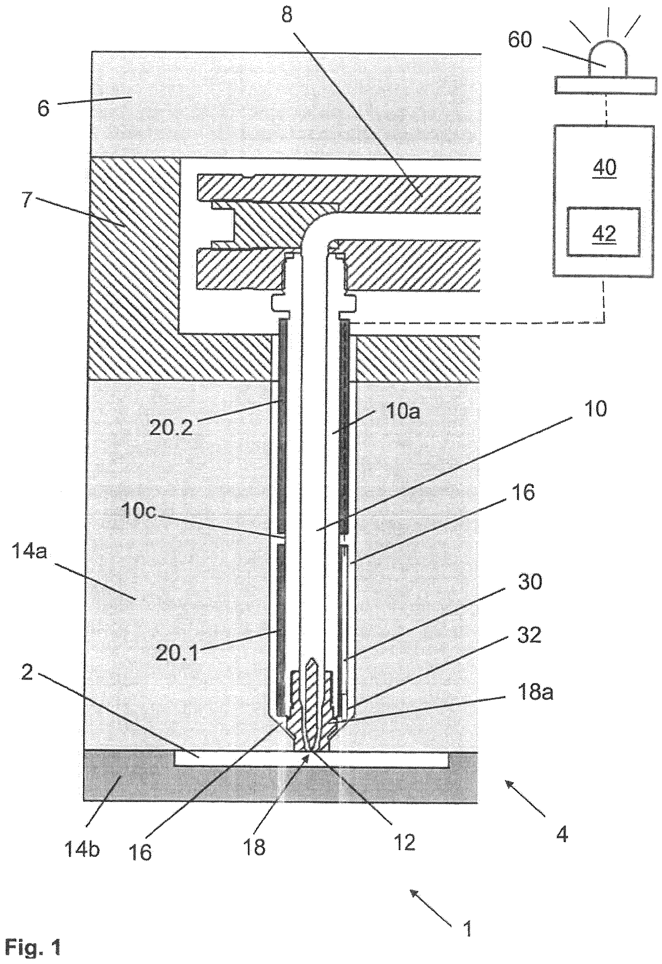

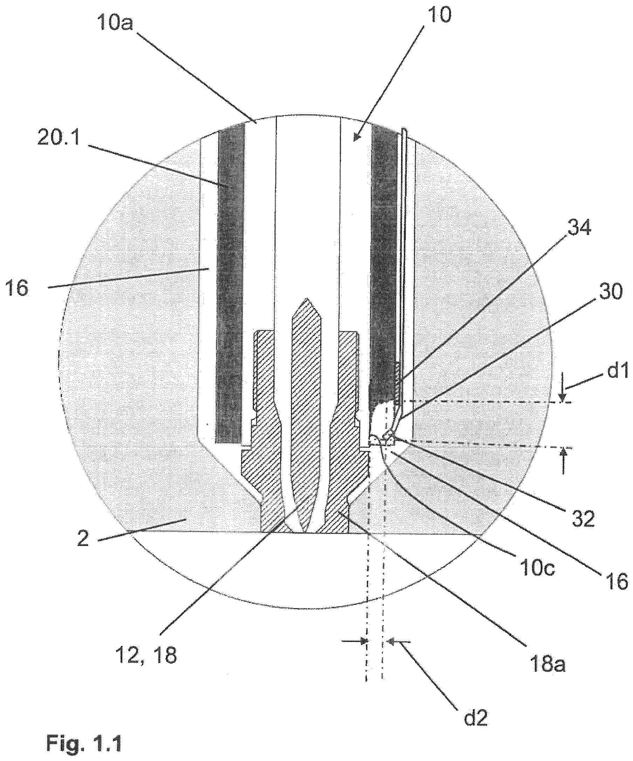

Wie in Fig. 1 gezeigt ist, umfasst eine Anordnung 1 zum Einspritzen von Kunststoff in eine Kavität 2 einer Spritzgussform 4 eine Aufspannplatte 6, eine Zwischenplatte 7, eine die Kavität 2 begrenzende Formplatte 14a, eine zu dieser komplementäre zweite Formplatte 14b, welche zur Freigabe eines nicht gezeigten Spritzgussteils von der Formplatte 14a weg bewegbar ist, einen Schmelzgut-Verteiler 8 sowie wenigstens eine Düse 10. Die Düse 10 besitzt einen langgestreckten Düsenkörper 10a mit einer Düsenöffnung 12, welcher sich durch einen in der Zwischenplatte 7 sowie der Formplatte 14a geformten Hohlraum 16 vom Schmelzgut-Verteiler 8 zu einem Angusspunkt 18 der Spritzgussform 4 erstreckt. In diesem wird das vom Schmelzgut-Verteiler 8 durch die Düse 10 hindurch zugeführte flüssige Schmelzgut in bekannter Weise durch die Düsenöffnung 12 in die Kavität 2 der Spritzgussform 4 injiziert, die im Gegensatz zur Düse 10 durch nicht näher gezeigte Kühlelemente/Kanäle in bekannter Weise gekühlt wird, um das Kunststoffmaterial zu verfestigen. An der Außenseite des Düsenkörpers 10a sind mehrere elektrische Heizelemente 20.1 und 20.2 angeordnet, mit deren Hilfe der Düsenkörper 10a zur Verflüssigung des Kunststoffmaterials auf eine vorbestimmte Temperatur erhitzt werden kann, die z.B. 250 °C oder mehr betragen kann.

In dem im Querschnitt bevorzugt kreisrunden Hohlraum 16 der Formplatte 14a, in den sich die Spitze des Düsenkörpers 10a hinein erstreckt, ist zwischen der Düsenöffnung 12 und dem Heizelement 20.1, welches am dichtesten entfernt von der Düsenöffnung 12 angeordnet ist, und nachfolgend als düsenöffnungsseitiges Heizelement 20 bezeichnet wird, ein Temperatursensor 30 mit einer schematisch angedeuteten temperaturempfindlichen Sensorfläche 32 angeordnet. Die temperaturempfindliche Sensorfläche 32 des Temperatursensors 30 ist erfindungsgemäß in einem Abstand d1 vom düsenöffnungsseitigen elektrischen Heizelement 20.1 angeordnet, der z.B. 1 mm bis 10 mm, bevorzugt 5 mm betragen kann. Dadurch ist der Sensor 30, bzw. die aktive Sensorfläche 32, die das Temperatur-Messsignal erzeugt durch einen Luftraum 34 allseitig thermisch vom Heizelement 20.1 isoliert. Anders ausgedrückt besteht zwischen der temperaturempfindlichen Sensorfläche 32 und dem düsenseitigen Heizelement 20 kein Werkstoffkontakt, durch den eine Übertragung von thermischer Energie erfolgen könnte, so dass sich die temperaturempfindliche Sensorfläche 32 allein durch die vom Heizelement 20.1, bzw. von der Oberfläche 10c des Düsenkörpers 10a emittierte Infrarotstrahlung und ggf. durch Konvektion erwärmt, während sie gleichzeitig, durch die ca. 20 °C warme Formplatte 14a gekühlt wird, welche einen Teil der von der Sensoroberfläche abgestrahlten Wärmestrahlung (Infrarotstrahlung) absorbiert.

Wie in der Darstellung der Fig. 1 angedeutet ist, ist der Temperatursensor 30 mit einer elektronischen Mess- und Auswerteinrichtung 40 gekoppelt, die erfindungsgemäß dazu eingerichtet ist, bei aktiviertem Heizelement 20.1, bzw. Heizelementen 20.1 bis 20.2, einen Anstieg der vom Temperatursensor 30 erfassten Temperaturmesswerte Tₘₑₛₛ über einen vorgegebenen Temperatur-Schwellenwert T_{Schwelle} hinaus zu erfassen. Die elektronische Mess- und Auswerteinrichtung 40 ist mit einer Alarmeinrichtung 60 verbunden, die ein Alarmsignal erzeugt, wenn die vom Temperatursensor 30 erfassten Temperaturmesswerte Tₘₑₛₛ den Temperatur-Schwellenwert T_{Schwelle} überschreiten. Hierdurch wird ein Bediener der Anordnung 1 frühzeitig darüber informiert, wenn an der betreffenden Düse 10 eine Leckage auftritt, die im Bereich des Düsenmundstücks 18a zu einem Eintritt des flüssigen, ca. 250 °C heißen Kunststoffmaterials in den Hohlraum 16 führt. Dieser ist im Bereich der temperaturempfindlichen Sensorfläche 32 ringförmig ausgeführt, wie dies in Fig. 1 angedeutet ist. Die Alarmeinrichtung 60 kann beispielsweise eine Signallampe oder einen akustischen Signalgeber oder einen Monitor umfassen, auf welchem eine entsprechende Warnmeldung über die erfasste Leckage angezeigt und bevorzugt ein Notstopp der Anordnung empfohlen wird.

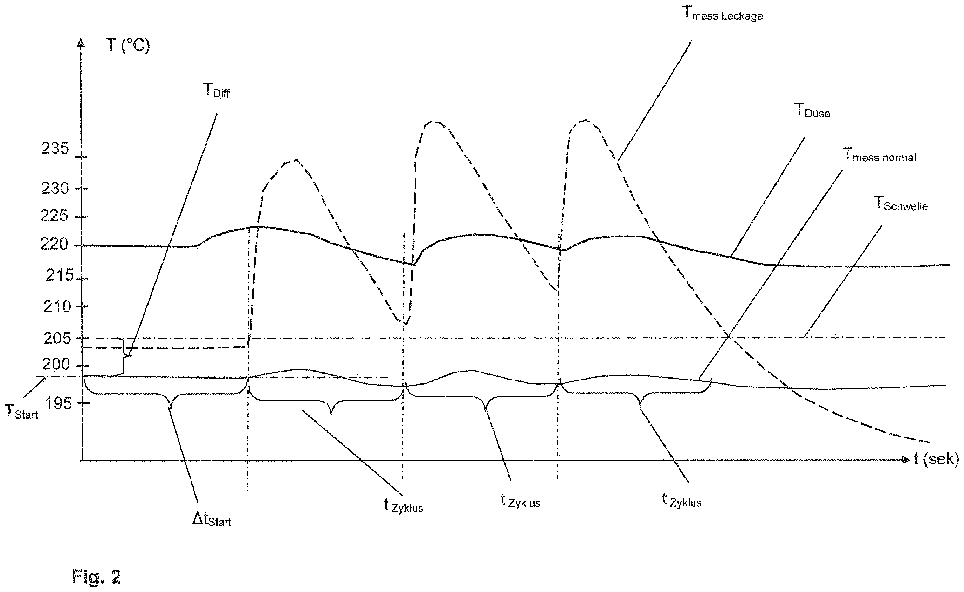

Wie der Darstellung der Fig. 2 anhand des vom Sensor 30 erfassten Temperaturverlaufs T_{mess normal} bei einer ordnungsgemäß arbeitenden, leckagefreien Düse 10 entnommen werden kann, ändern sich die Temperaturwerte Tₘₑₛₛ während der statischen Anlaufphase Δt_{Start} der Anordnung 1 und auch danach während der Arbeitszyklen der Anordnung 1 nur um wenige °C, da die Oberflächentemperatur der temperaturempfindlichen Sensorfläche 32 durch die Isolationswirkung der Luft und die in der Regel gekühlte Formplatte 14a signifikant kühler als die Temperatur der Düse 10 bzw. des Heizelements 20 ist. Die Temperatur T_{Düse} der Außenoberfläche 10c des Düsenkörpers 10a der Düse 10 ist in Fig. 2 ebenfalls mit eingezeichnet und liegt erkennbar um ca. 20 °C oberhalb der Temperatur T_{mess normal}, die aufgrund der Kühlwirkung der Formplatte 14a auf die temperaturempfindliche Sensorfläche 32 entsprechend abgesenkt ist. Diese liegt lediglich bei ca. 200 °C, wohingegen die Temperatur T_{Düse} der Außenoberfläche 10c des Düsenkörpers 10a bei ca. 220 °C liegt. Wie der Darstellung der Fig. 2 entnommen werden kann, ist hierbei auch die vom Temperatursensor 30 ermittelte Temperatur T_{mess normal} zwischen den Injektionsvorgängen (Spritzgießzyklen) vergleichsweise konstant und ändert sich nur um wenige Grad.

Demgegenüber führt das Auftreten einer Leckage im Bereich des Düsenmundstücks 18a, bei der zwischen der Formplatte 14a und der Spitze des Düsenkörpers 10a flüssiges Kunststoffmaterial in den Hohlraum 16 gelangt, zu einer sofortigen sehr starken Temperaturerhöhung, und zwar bereits mit dem ersten Injektionsvorgang nach dem Durchlaufen der Aufheizphase/Anlaufphase Δtₛₜₐᵣₜ, wie anhand der gestrichelten Linie T_{mess Leckage} in Fig. 2 angedeutet ist. Hierbei steigen die vom Temperatursensor 30 gemessenen Temperaturwerte mit jedem Einspritzvorgang abwechselnd bis auf einen Maximalwert an, der anfänglich bei ca. 230 °C liegt und beim zweiten und dritten Injektionsvorgang bis auf eine Temperatur ansteigt, die nahezu der Temperatur der flüssigen Kunststoffschmelze von ca. 240 °C entspricht. Nach dem dritten Injektionsvorgang fällt die vom Sensor 30 erfasste Temperatur Tₘₑₛₛ dann auf einen Wert ab, der unterhalb der vom Sensor 30 erfassten mittleren Temperaturstartwert T_{Start} während der Anlaufphase Δt_{Start} der Anordnung 1 liegt, was dadurch bedingt ist, dass die Heizeinrichtungen 20 abgeschaltet und die Anordnung 1 heruntergefahren wurden, um eventuelle Beschädigungen an der Spritzgussform 4 bzw. der Düse 10 zu vermeiden.

Wie der Darstellung der Fig. 2 weiterhin entnommen werden kann, wurde der Schwellenwert T_{Schwelle,} bei welchem das Alarmsignal erzeugt wird, um einen Bediener zu warnen, bzw. die Anordnung 1 herunter zu fahren, beispielhaft auf ca. 7 °C über T_{Start} gesetzt, wobei der Wert selbstverständlich auch niedriger oder höher gewählt werden kann, je nachdem wie empfindlich die Anordnung reagieren soll.

Wie der Darstellung der Fig. 1.1 entnommen werden kann, ist der Temperatursensor 30 bevorzugt so angeordnet, dass die temperaturempfindliche Sensorfläche 32 gleichzeitig auch in einem zweiten Abstand d2 von der Außenoberfläche 10c des Düsenkörpers 10a positioniert ist, so dass zwischen der temperaturempfindlichen Sensorfläche 32 und der Außenoberfläche 10c des Düsenkörpers 10a ebenfalls ein Freiraum verbleibt, welcher der Einfachheit halber als weiterer Luftraum bezeichnet wird, der die temperaturempfindliche Sensorfläche 32 gegenüber der Außenoberfläche 10c des Düsenkörpers 10a thermisch isoliert.

Wie bereits zuvor ausgeführt wurde, beträgt auch der zweite Abstand d2 bevorzugt zwischen 1 mm und 10 mm, insbesondere zwischen 2 und 6 mm.

Gemäß der Darstellung von Fig. 1.1 ist der Temperatursensor 30 bei der bevorzugten Ausführungsform der Erfindung in einer lediglich schematisch angedeuteten Sensorhalterung 34 aus einem thermisch isolierenden Werkstoff aufgenommen, beispielsweise einem Keramikwerkstoff, die bevorzugt unmittelbar an der Außenseite des Düsenkörpers 10a befestigt ist. Diese ist in vorteilhafter Weise in einer Ausnehmung des elektrischen Heizelements 10.1 angeordnet, um den Sensor 30 beim Einführen der Nadelverschlussdüse 10 in den Hohlraum nicht zu beschädigen. Die Ausnehmung kann z.B. als ein in den Figuren nicht dargestellter Spalt zwischen den Längsrändern des in axialer Richtung geschlitzten Heizelements 10.1 ausgestaltet sein, in welchem die temperaturempfindliche Sensorfläche 32 positioniert ist. Alternativ kann der Temperatursensor 30 auch an der gekühlten Formplatte 14a befestigt sein, wobei die temperaturempfindliche Sensorfläche 32 im Abstand von der Oberfläche der Formplatte 14a angeordnet ist, derart, dass die temperaturempfindliche Sensorfläche 32 thermisch isoliert im Hohlraum 16 liegt, so dass diese sowohl von der gekühlten Formplatte 14a, als auch vom Heizelement 20.1, bzw. von der Außenoberfläche des Düsenkörpers 10a durch einen Luftraum, und/oder durch ein Isolationsmaterial, z.B. eine Lage Keramikwerkstoff, thermisch isoliert ist. Dadurch wird die temperaturempfindliche Sensorfläche 32 in erster Linie durch die im Hohlraum 16 erzeugte Wärmestrahlung sowie im geringen Umfang auch durch Konvektion der dort befindlichen Luft erwärmt.

Aus Fig. 1 ist weiterhin ersichtlich, dass die elektrischen Zuleitungen von der elektronischen Mess- und Auswerteinrichtung 40 zum Temperartursensor 30 thermisch isolierte Leitungen sind, die bevorzugt geschützt zwischen dem düsenöffnungsseitigen Heizelement 20.1 sowie auch dem weiteren Heizelementen 20.2 entlang der Außenoberfläche des Düsenkörpers 10a und im Abstand unterhalb des beheizten Schmelzgut-Verteilers 8 verlaufen.

Wie bereits zuvor erwähnt wurde, ist die elektronische Mess- und Auswerteinrichtung 40 dazu eingerichtet, den Verlauf der vom Temperatursensor 30 erfassten Temperaturmesswerte Tₘₑₛₛ während des Betriebs der Anordnung 1 über eine Vielzahl von Arbeitszyklen hinweg bevorzugt fortlaufend zu erfassen, wobei die Erfassungsintervalle beispielsweise 100 ms betragen können, und zu Beginn eines ersten Injektionsvorgangs auch kürzere Erfassungsintervalle denkbar sind, um die Auflösung zu steigern. Die elektronische Mess- und Auswerteinrichtung 40 vergleicht dazu die erfassten Temperaturmesswerte Tₘₑₛₛ fortlaufend mit dem Temperaturschwellenwert T_{Schwelle} und aktiviert die Alarmeinrichtung 60 wenn dieser überschritten ist. Hierbei kann es zur Vermeidung von Fehlalarmen auch vorgesehen sein, dass der Alarm ausgesetzt wird und erst nach einem erneuten Überschreiten des Schwellenwertes T_{Schwelle} in einem weiteren Arbeitszyklus aktiviert wird, bzw. gleichzeitig oder alternativ die Kunststoffspritzmaschine automatisch heruntergefahren wird.

Wie der Darstellung der Fig. 1 weiterhin entnommen werden kann, umfasst die elektronische Mess- und Auswerteinrichtung 40 bevorzugt einen elektronischen Speicher 42, in welchen der Temperatur-Schwellenwert T_{Schwelle} bevorzugt manuell als Temperatur-Differenzwert T_{Diff} eingebbar und speicherbar ist. Dieser wird bevorzugt dazu verwendet, die Leckageerkennung in der Anordnung 1 vor dem ersten Arbeitszyklus in vorteilhafter Weise automatisch zu initialisieren, wozu die elektronische Mess- und Auswerteinrichtung 40 dazu eingerichtet ist, nach dem Durchlaufen einer Aufheizphase Δt_{Start} einen mittleren Temperaturstartwert Tₛₜₐᵣₜ selbständig zu erfassen und im Speicher 42 der elektronischen Mess- und Auswerteinrichtung 40 abzulegen. Dieser abgelegte mittlere Temperaturstartwert Tₛₜₐᵣₜ wird von der Auswerteinrichtung 40 im Anschluss daran vor dem Durchlaufen des ersten Arbeitszyklus in einer Folge von Arbeitszyklen, z.B. zu Beginn eines Arbeitstages dazu herangezogen, den Temperatur-Schwellenwert T_{Schwelle} durch Addition des mittleren Temperaturstartwerts Tₛₜₐᵣₜ mit dem vorgegebenen Temperatur-Differenzwert T_{Diff} zu errechnen.

### Liste der Bezugszeichen

- 1: Anordnung
- 2: Kavität
- 4: Spritzgussform
- 6: Aufspannplatte
- 7: Zwischenplatte
- 8: Schmelzgut-Verteiler
- 10: Düse
- 10a: langgestreckter Düsenkörper
- 10c: Außenoberfläche des Düsenkörpers
- 12: Düsenöffnung (Anspritzpunkt)
- 14a: Formplatte
- 14b: komplementäre Formplatte
- 16: Hohlraum der Formplatte
- 18: Angusspunkt der Spritzgussform
- 18a: Düsenmundstück
- 20.1-2: elektrisches Heizelement
- 30: Temperatursensor
- 32: temperaturempfindliche Sensorfläche
- 34: Sensorhalterung
- 40: elektronische Mess- und Auswerteinrichtung
- 42: Speicher
- 60: Alarmeinrichtung
- d1: Abstand zwischen temperaturempfindlicher Sensorfläche und Heizelement
- d2: Abstand zwischen temperaturempfindlicher Sensorfläche und Außenseite des Düsenkörpers
- Tₘₑₛₛ: Temperaturmesswerte
- T_{mess normal}: Temperaturmesswerte bei ordnungsgemäßem Betrieb
- T_{mess Leckage}: Temperaturmesswerte bei Auftreten einer Leckage
- T_{Schwelle}: Temperatur-Schwellenwert
- T_{Diff}: Temperatur-Differenzwert
- Tₛₜₐᵣₜ: mittlerer Temperaturstartwert während der Anlaufphase
- T_{Düse}: Temperatur des Düsengehäuses
- Δtₛₜₐᵣₜ: Anlaufphase der Anordnung

## Patentansprüche

1. Anordnung (1) zum Einspritzen von Kunststoff in eine Kavität (2) einer Spritzgussform (4) umfassend eine Aufspannplatte (6), eine die Kavität (2) begrenzende Formplatte (14a), einen Schmelzgut-Verteiler (8) sowie wenigstens eine Düse (10), die einen langgestreckten Düsenkörper (10a) mit einer Düsenöffnung (12) besitzt, welcher sich durch einen in der Formplatte (14a) geformten Hohlraum (16) vom Schmelzgut-Verteiler (8) aus zur Kavität (2) erstreckt, wobei das durch die Düse (10) zugeführte flüssige Schmelzgut durch die Düsenöffnung (12) hindurch in die Kavität (2) der Spritzgussform (4) injiziert wird, und wobei an der Außenseite des Düsenkörpers (10a) wenigstens ein elektrisches Heizelement (20.1) angeordnet ist, mittels welchem der Düsenkörper (10a) zur Verflüssigung des Kunststoffmaterials auf eine vorbestimmte Temperatur erhitzbar ist, wobei
im Hohlraum (16) der Formplatte (14a) zwischen dem Heizelement (20) und der Düsenöffnung (12) ein Temperatursensor (30) angeordnet ist, dessen temperaturempfindliche Sensorfläche (32) im Abstand (d1) vom elektrischen Heizelement (20.1) angeordnet und durch einen Luftraum (d1, d2) thermisch allseitig vom Heizelement (20.1) isoliert ist, und dass eine mit dem Temperatursensor (30) gekoppelte elektronische Mess- und Auswerteinrichtung (40) vorgesehen ist, die dazu eingerichtet ist, bei aktiviertem Heizelement (20) einen Anstieg der vom Temperatursensor (30) erfassten Temperaturmesswerte (Tₘₑₛₛ) über einen vorgegebenen Temperatur-Schwellenwert (T_{Schwelle}) hinaus zu erfassen, und dass eine mit der elektronischen Mess- und Auswerteinrichtung (40) gekoppelte Alarmeinrichtung (60) vorgesehen ist, welche ein Alarmsignal erzeugt, wenn die vom Temperatursensor (30) erfassten Temperaturmesswerte (Tₘₑₛₛ) den Temperatur-Schwellenwert (T_{Schwelle}) überschreiten,
**dadurch gekennzeichnet,**
**dass** die temperaturempfindliche Sensorfläche (32) zusätzlich in einem zweiten Abstand (d2) von der Außenoberfläche (10c) des Düsenkörpers (10a) angeordnet ist, derart, dass zwischen der temperaturempfindlichen Sensorfläche (32) und der Außenoberfläche (10c) des Düsenkörpers (10a) ein weiterer Luftraum angeordnet ist, welcher die temperaturempfindliche Sensorfläche gegenüber der Außenoberfläche (10c) des Düsenkörpers (10a) thermisch isoliert.

2. Anordnung nach Anspruch 1,
**dadurch gekennzeichnet,**
**dass** der Abstand (d1), in welchem die temperaturempfindliche Sensorfläche (32) vom Heizelement (20) angeordnet ist, zwischen 1 mm und 10 mm, bevorzugt zwischen 2 und 6 mm beträgt.

3. Anordnung nach Anspruch 1 oder 2,
**dadurch gekennzeichnet,**
**dass** der Abstand (d2), in welchem die temperaturempfindliche Sensorfläche (32) von der Außenoberfläche (10c) des Düsenkörpers (10a) angeordnet ist, zwischen 1 mm und 10 mm, bevorzugt zwischen 2 und 6 mm beträgt.

4. Anordnung nach einem der vorhergehenden Ansprüche,
**dadurch gekennzeichnet,**
**dass** der Temperatursensor (30) in einer Sensorhalterung (34) aus einem thermisch isolierenden Werkstoff aufgenommen ist, die an der Außenseite des Düsenkörpers (10a) oder am Heizelement (20) befestigt ist.

5. Anordnung nach einem der vorhergehenden Ansprüche
**dadurch gekennzeichnet,**
**dass** der Temperatursensor (30) an der Formplatte (14a) befestigt ist und die temperaturempfindliche Sensorfläche (32) thermisch isoliert im Hohlraum (16) liegt.

6. Anordnung nach einem der vorhergehenden Ansprüche,
**dadurch gekennzeichnet,**
**dass** die Alarmeinrichtung (60) eine Signallampe und/oder einen akustischen Signalgeber und/oder einen Bildschirm umfasst, auf welchem das Warnsignal ausgegeben wird.

7. Anordnung nach einem der vorhergehenden Ansprüche,
**dadurch gekennzeichnet,**
**dass** die elektronische Mess- und Auswerteinrichtung (40) dazu eingerichtet ist, den Verlauf der vom Temperatursensor (30) erfassten Temperaturmesswerte (Tₘₑₛₛ) während des Betriebs der Anordnung (1) über eine Vielzahl von Arbeitszyklen hinweg zu erfassen, und dass die elektronische Mess- und Auswerteinrichtung (40) die Ausgabe des Alarmsignals über die Alarmeinrichtung (60) veranlasst und/oder die Kunststoffspritzmaschine herunterfährt, wenn der vom Temperatursensor während des Betriebs der Anordnung (1) ermittelte Temperaturmesswert (Tₘₑₛₛ) im Hohlraum den vorgegebenen Temperatur-Schwellenwert (T_{Schwelle}) in mehr als zwei aufeinander folgenden Arbeitszyklen überschreitet.

8. Anordnung nach einem der vorhergehenden Ansprüche,
**dadurch gekennzeichnet,**
**dass** die elektronische Mess- und Auswerteinrichtung (40) einen Speicher (42) umfasst, in welchen der Temperatur-Schwellenwert (T_{Schwelle}) bevorzugt manuell als Temperatur-Differenzwert (T_{Diff}) eingebbar und abspeicherbar ist.

9. Anordnung nach Anspruch 8.
**dadurch gekennzeichnet,**
**dass** die elektronische Mess- und Auswerteinrichtung (40) dazu eingerichtet ist, nach dem Durchlaufen einer Aufheizphase einen mittleren Temperaturstartwert (Tₛₜₐᵣₜ) selbständig zu erfassen und im Speicher (42) der elektronischen Mess- und Auswerteinrichtung (40) abzulegen, und im Anschluss daran vor dem Durchlaufen eines ersten Arbeitszyklus der Anordnung (1) den Temperatur-Schwellenwert (T_{Schwelle}) durch Addition des mittleren Temperaturstartwerts (Tₛₜₐᵣₜ) mit dem vorgegebenen Temperatur-Differenzwert (T_{Diff}) zu bestimmen.

10. Anordnung (1) nach einem der vorhergehenden Ansprüche,
**dadurch gekennzeichnet,**
**dass** die elektrischen Zuleitungen von der elektronischen Mess- und Auswerteinrichtung (40) zum Temperartursensor (30) thermisch abgeschirmte Leitungen sind, die zwischen dem Heizelement (20) und der Außenseite (10 c) des Düsenkörpers (10a) verlaufen.

## Claims

1. Arrangement (1) for injecting plastic into a cavity (2) of an injection mould (4) comprising a platen (6), a mould plate (14a) delimiting the cavity (2), a molten material distributor (8), and at least one nozzle (10) having an elongated nozzle body (10a) with a nozzle opening (12), said nozzle body extending through a hollow space (16) shaped in the mould plate (14a) from the molten material distributor (8) to the cavity (2), wherein the liquid molten material fed in through the nozzle (10) is injected into the cavity (2) of the injection mould (4) through the nozzle opening (12), and wherein at least one electrical heating element (20.1) is arranged on the outer side of the nozzle body (10a), the nozzle body (10a) being heatable to a predetermined temperature for the purpose of liquefying the plastic material by means of said heating element, wherein
a temperature sensor (30) is arranged in the hollow space (16) of the mould plate (14a) between the heating element (20) and the nozzle opening (12), the temperature-sensitive sensor surface (32) of which temperature sensor is arranged at a distance (d1) from the electrical heating element (20.1) and is thermally insulated from the heating element (20.1) on all sides by an air space (d1, d2), and wherein an electronic measurement and evaluation device (40) coupled to the temperature sensor (30) is provided, which is configured, with the heating element (20) being activated, to detect a rise in the temperature measurement values (Tₘₑₐₛ) detected by the temperature sensor (30) beyond a predefined temperature threshold value (T_{threshold}), and wherein an alarm device (60) coupled to the electronic measurement and evaluation device (40) is provided, which generates an alarm signal if the temperature measurement values (Tₘₑₐₛ) detected by the temperature sensor (30) exceed the temperature threshold value (T_{threshold}),
**characterized**
**in that** the temperature-sensitive sensor surface (32) is additionally arranged at a second distance (d2) from the outer surface (10c) of the nozzle body (10a), in such a way that a further air space is arranged between the temperature-sensitive sensor surface (32) and the outer surface (10c) of the nozzle body (10a), said further air space thermally insulating the temperature-sensitive sensor surface relative to the outer surface (10c) of the nozzle body (10a).

2. Arrangement according to Claim 1,
**characterized**
**in that** the distance (d1) at which the temperature-sensitive sensor surface (32) is arranged in relation to the heating element (20) is between 1 mm and 10 mm, preferably between 2 and 6 mm.

3. Arrangement according to Claim 1 or 2,
**characterized**
**in that** the distance (d2) at which the temperature-sensitive sensor surface (32) is arranged in relation to the outer surface (10c) of the nozzle body (10a) is between 1 mm and 10 mm, preferably between 2 and 6 mm.

4. Arrangement according to any of the preceding claims,
**characterized**
**in that** the temperature sensor (30) is accommodated in a sensor mount (34) composed of a thermally insulating material, said sensor mount being secured to the outer side of the nozzle body (10a) or to the heating element (20).

5. Arrangement according to any of the preceding claims,
**characterized**
**in that** the temperature sensor (30) is secured to the mould plate (14a) and the temperature-sensitive sensor surface (32) lies in the hollow space (16) in a thermally insulated manner.

6. Arrangement according to any of the preceding claims,
**characterized**
**in that** the alarm device (60) comprises a signal lamp and/or an acoustic signal transmitter and/or a screen, on which the warning signal is output.

7. Arrangement according to any of the preceding claims,
**characterized**
**in that** the electronic measurement and evaluation device (40) is configured to detect the profile of the temperature measurement values (Tₘₑₐₛ) detected by the temperature sensor (30) during the operation of the arrangement (1) over a plurality of work cycles, and in that the electronic measurement and evaluation device (40) instigates the outputting of the alarm signal by way of the alarm device (60) and/or shuts down the plastic injection machine if the temperature measurement value (Tₘₑₐₛ) ascertained by the temperature sensor during the operation of the arrangement (1) in the hollow space exceeds the predefined temperature threshold value (T_{threshold}) in more than two successive work cycles.

8. Arrangement according to any of the preceding claims,
**characterized**
**in that** the electronic measurement and evaluation device (40) comprises a memory (42), into which the temperature threshold value (T_{threshold}) is able to be input and stored as a temperature difference value (T_{diff}), preferably manually.

9. Arrangement according to Claim 8,
**characterized**
**in that** the electronic measurement and evaluation device (40) is configured, after a heating-up phase has been effected, to independently detect an average temperature start value (Tₛₜₐᵣₜ) and store it in the memory (42) of the electronic measurement and evaluation device (40), and after that, before a first work cycle of the arrangement (1) is effected, to determine the temperature threshold value (T_{threshold}) by adding the average temperature start value (Tₛₜₐᵣₜ) to the predefined temperature difference value (T_{diff}).

10. Arrangement (1) according to any of the preceding claims,
**characterized**
**in that** the electrical leads from the electronic measurement and evaluation device (40) to the temperature sensor are thermally shielded leads running between the heating element (20) and the outer side (10c) of the nozzle body (10a).

## Revendications

1. Arrangement (1) pour injecter de la matière plastique dans une cavité (2) d'un moule de moulage par injection (4), comprenant un plateau mobile (6), une plaque profilée (14a) qui délimite la cavité (2), un distributeur de matière fondue (8) ainsi qu'au moins une buse (10), qui possède un corps de buse (10a) allongé pourvu d'une ouverture de buse (12), qui s'étend à travers un espace creux (16) formé dans la plaque profilée (14a) depuis le distributeur de matière fondue (8) jusqu'à la cavité (2), la matière fondue acheminée à travers la buse (10) étant injectée dans la cavité (2) du moule de moulage par injection (4) à travers l'ouverture de buse (12), et au moins un élément chauffant (20.1) électrique étant disposé au niveau du côté extérieur du corps de buse (10a), au moyen duquel le corps de buse (10a) peut être chauffé à une température prédéterminée en vue de liquéfier la matière plastique, une sonde de température (30) étant disposée dans l'espace creux (16) de la plaque profilée (14a) entre l'élément chauffant (20) et l'ouverture de buse (12), dont la surface de capteur (32) sensible à la température est disposée à une distance (d1) de l'élément chauffant (20.1) électrique et qui est isolée thermiquement de l'élément chauffant (20.1) de tous les côté par un espace d'air (d1, d2), et un dispositif de mesure et d'interprétation (40) électronique, couplé à la sonde de température (30), étant présent, lequel est conçu pour, lorsque l'élément chauffant (20) est activé, détecter une augmentation des valeurs mesurées de la température (Tₘₑₛₛ) acquises par la sonde de température (30) au-dessus d'une valeur de seuil de température (T_{Schwelle}) prédéfinie, et un dispositif d'alarme (60) couplé au dispositif de mesure et d'interprétation (40) électronique étant présent, lequel génère un signal d'alarme lorsque les valeurs mesurées de la température (Tₘₑₛₛ) acquises par la sonde de température (30) dépassent la valeur de seuil de température (T_{Schwelle}),
**caractérisé en ce**
**que** la surface de capteur (32) sensible à la température est en plus disposée à une deuxième distance (d2) de la surface extérieure (10c) du corps de buse (10a), de telle sorte qu'un espace d'air supplémentaire, qui isole thermiquement la surface de capteur sensible à la température par rapport à la surface extérieure (10c) du corps de buse (10a), est disposé entre la surface de capteur (32) sensible à la température et la surface extérieure (10c) du corps de buse (10a).

2. Arrangement selon la revendication 1, **caractérisé en ce que** la distance (d1), à laquelle est disposée la surface de capteur (32) sensible à la température par rapport à l'élément chauffant (20), est comprise entre 1 mm et 10 mm, de préférence entre 2 mm et 6 mm.

3. Arrangement selon la revendication 1 ou 2, **caractérisé en ce que** la distance (d2), à laquelle est disposée la surface de capteur (32) sensible à la température par rapport à la surface extérieure (10c) du corps de buse (10a), est comprise entre 1 mm et 10 mm, de préférence entre 2 mm et 6 mm.

4. Arrangement selon l'une des revendications précédentes, **caractérisé en ce que** la sonde de température (30) est logée dans un porte-sonde (34) en un matériau thermiquement isolant, qui est fixé au niveau du côté extérieur du corps de buse (10a) ou à l'élément chauffant (20).

5. Arrangement selon l'une des revendications précédentes, **caractérisé en ce que** la sonde de température (30) est fixée à la plaque profilée (14a) et la surface de capteur (32) sensible à la température repose de manière thermiquement isolée dans l'espace creux (16).

6. Arrangement selon l'une des revendications précédentes, **caractérisé en ce que** le dispositif d'alarme (60) comporte une lampe de signalisation et/ou un transmetteur de signal acoustique et/ou un écran sur lequel est délivré le signal d'alerte.

7. Arrangement selon l'une des revendications précédentes, **caractérisé en ce que** le dispositif de mesure et d'interprétation (40) électronique est conçu pour acquérir l'évolution des valeurs mesurées de la température (Tₘₑₛₛ) acquises par la sonde de température (30) pendant le fonctionnement de l'arrangement (1) sur une pluralité de cycles de travail, et **en ce que** le dispositif de mesure et d'interprétation (40) électronique provoque l'émission du signal d'alarme par le biais du dispositif d'alarme (60) et/ou met à l'arrêt la machine de moulage par injection de matière plastique lorsque la valeur mesurée de la température (Tₘₑₛₛ) déterminée pendant le fonctionnement de l'arrangement (1) dans l'espace creux dépasse la valeur de seuil de température (T_{Schwelle}) prédéfinie dans plus de deux cycles de travail successifs.

8. Arrangement selon l'une des revendications précédentes, **caractérisé en ce que** le dispositif de mesure et d'interprétation (40) électronique comporte une mémoire (42) dans laquelle peut être entrée et mémorisée la valeur de seuil de température (T_{Schwelle}), de préférence manuellement en tant que valeur différentielle de température (T_{Diff}).

9. Arrangement selon la revendication 8, **caractérisé en ce que** le dispositif de mesure et d'interprétation (40) électronique est conçu pour, après l'itération d'une phase de chauffe, détecter automatiquement une valeur initiale de température (Tₛₜₐᵣₜ) moyenne et la stocker dans la mémoire (42) du dispositif de mesure et d'interprétation (40) électronique et, à la suite de cela, avant l'itération d'un premier cycle de travail de l'arrangement (1), déterminer la valeur de seuil de température (T_{Schwelle}) par addition de la valeur initiale de température (Tₛₜₐᵣₜ) moyenne et de la valeur différentielle de température (T_{Diff}) prédéfinie.

10. Arrangement (1) selon l'une des revendications précédentes, **caractérisé en ce que** les câbles d'arrivée électriques du dispositif de mesure et d'interprétation (40) électronique vers la sonde de température (30) sont des câbles protégés thermiquement qui suivent un tracé entre l'élément chauffant (20) et le côté extérieur (10c) du corps de buse (10a).
